# EUROPEAN PATENT APPLICATION

(11) **EP 1 310 697 A1**
(43) Date of publication of application: **14.05.2003**
(21) Application number: 02257835.5
(22) Date of filing: 13.11.2002
(51) Int. Cl.: F16D 51/30, F16D 65/56

(54) **Dual leading-shoe drum brake**

(30) Priority: 13.11.2001 US 986956
(71) Applicant: Akebono Corporation North America, Farmington Hills, MI 48331 (US)
(72) Inventor: Barbosa, Manuel, Movi, Michigan 48375 (US)
(74) Representative: Crouch, David John

(57) **Abstract**

A dual leading-shoe drum brake system includes two actuating levers (10) that engage brake shoes (8). The levers are located between upper (12) and lower (14) anchors, with the bottoms of the actuating levers (10) engaging the lower anchor (14) as a fulcrum. A hydraulic cylinder is arranged to engage the upper ends of the levers (10) to force them apart during braking. A brake shoe (8) is positioned adjacent each lever (10) so that the shoes are forced outward with the levers. The brake shoes selectively engage the upper and lower anchors (12,14) during braking to receive the braking forces depending on the direction of rotation of the brake drum. The levers preferably float with respect to the backing plate (2), and the shoes are connected to the lever to float with them. A parking brake lever is arranged to engage an automatic adjusting link to provide dual leading-shoe operation during braking also.

## Description

### TECHNICAL FIELD

1. This invention relates to the art of drum brakes used for vehicles. In particular the invention relates to a type of drum brake known as a dual, or two, leading-shoe design.

### BACKGROUND

2. Drum brakes of a dual (two) leading-shoe design are known. Brakes of this type include brake shoes that are connected to levers for actuation. The levers engage the brake shoes at the mid-points of the shoes to force the brake shoes against the brake drum. Abutments are provided at opposite ends of the brake shoes to receive the braking forces, the abutments typically being mounted on a post extending through the backing plate. Examples of such a design are shown in United States patents 2,432,983 (Buckendale et al.) and 2,337,069 (Spiller).

3. The Buckendale patent shows a drum brake design that includes levers for actuating the brake shoes and abutments for engaging the ends of the brake shoes to receive the braking forces. The Buckendale design accommodates lining wear by an adjustment mechanism that includes an eccentric to adjust the position of one of the abutments.

### SUMMARY OF THE INVENTION

4. In accordance with the invention, a dual leading-shoe brake system includes two brake shoes, each of which is operated by a lever that is activated in normal operation by a hydraulic cylinder. A parking brake structure activates the brake shoes also in a dual leading-shoe fashion.

5. The structure of the brake according to the invention is simple and robust. A backing plate is provided with upper and lower anchor elements, which are preferably in the form of blocks secured to the backing plate by rivets. The blocks engage the brake shoes during braking and resist the braking forces, and the rivets are placed mainly in shear during braking. Curved actuating levers are arranged to extend between the anchors such that their lower ends engage the lower anchors and their upper ends engage a hydraulic activation cylinder. The brake shoes engage the levers at the mid-portions of the shoes and the levers so that the forces applied by the levers to the shoes is multiplied and is the same for forward and reverse directions of the vehicle.

6. In the preferred embodiment, the levers and shoes are pinned to each other and float together with respect to the backing plate. Other arrangements are possible, however. It is generally desirable to control the motions of the levers and shoes to avoid unintended motions. For example, if the movement of the levers is not controlled, it is possible that they will engage the brake drum and cause damage. In the preferred arrangement, the movement of the levers is controlled because the brake shoes are confined to move only between the anchors, and the movement of the levers is controlled because they are pinned to the shoes. One alternative arrangement is where the levers are pinned to the baking plate and the shoes float with respect to the levers between anchors.

7. The minimum distance between the shoes is set by the length of an adjuster link, the structure of which is much the same as in known drum brake systems but which is placed between the upper ends of the two levers. The length of this adjuster link may be adjusted automatically or otherwise to accommodate lining wear, and the adjuster is used to advantage in the present invention in the application of a parking brake. A parking brake lever is pivotally attached to one of the actuating levers and also engages the adjustment link. When activated, the parking brake lever rotates about the pivotal attachment point to push on the adjustment link on the one hand and to push on the brake shoe lever at the pivotal connection on the other. Thus, the parking brake lever applied forces to the levers so that the parking brake mechanism is also a dual leading-shoe system.

8. It will be appreciated that the particular parking brake mechanism shown will work as well with a link of fixed length and that a separate adjustment mechanism were employed.

9. It is an object of the invention to provide a dual leading-shoe brake system that is robust and easily constructed.

10. It is another object of the invention to provide a dual leading-shoe brake system that provides a dual leading-shoe parking brake arrangement.

### BRIEF DESCRIPTION OF THE INVENTION

11. Figure 1 is a partial cross section of a brake system in accordance with the invention showing all of the elements.

12. Figure 2 is a partial cross section of a brake system in accordance with the invention showing only the levers, shoes, and anchor blocks.

### DETAILED DESCRIPTION OF THE PREFERRED EMBODIMENT

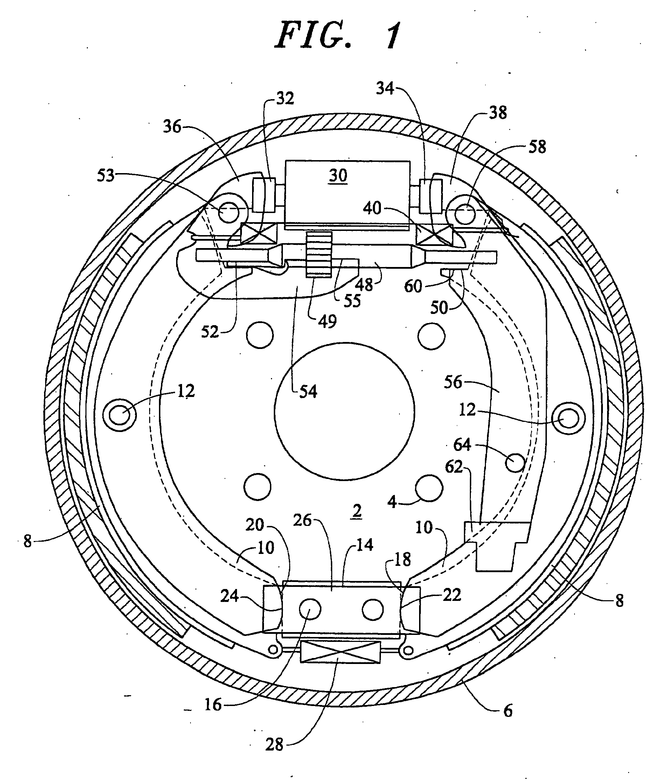

13. With reference to figure 1 of the drawings, a dual leading-shoe brake system in accordance with the invention comprises a backing plate 2 having bolt holes 4 for facilitating attachment to an axle housing (not shown) as is known in the art. A brake drum 6 for securing to a vehicle wheel (not shown) is mounted for rotation with respect to the backing plate. Brake shoes 8 are mounted to the backing plate for selective engagement with the inner surface of the brake drum during braking.

14. Each of the brake shoes 8 is associated with and actuated by a respective actuating lever 10. In the preferred embodiment, each shoe is attached to a respective lever by a connecting pin 12 located at the mid-point of the lever. In the embodiment shown, the pin extends through holes in the brake shoe so that the brake shoe and lever move together during braking. In this arrangement, the levers and shoes float together with respect to the backing plate.

15. Other connecting mechanisms between the lever and the shoe are possible. For example, a part of the lever, such as an outer surface of the lever or the outer surface of a protuberance on the lever, could engage a surface on the shoe to hold the two elements together.

16. A first anchor block 14 is secured to the backing plate 2. The anchor is preferably secured by rivets 16 extending into or through the backing plate. The anchor block 14 provides outer surfaces 18 and 20 that engage the lower ends 22 and 24 of the actuating levers and provide pivot points about which the levers rotate. A securing plate 26 is secured to the top of the anchor to hold the ends of the levers between the securing plate and the backing plate. A spring 28 is connected between the ends of the levers to hold the ends 22 and 24 to surfaces 18 and 20.

17. The anchor block is shown unitary, but it may comprise two or more parts. An advantage of the preferred use of rivets to secure the anchors is that the braking forces place the rivets in shear and, as such, they are stronger than other designs wherein the elements securing the anchor block are placed in torsion. It should be noted, however, that several advantages of the invention would be obtained with a variety of other anchor structures.

18. A hydraulic cylinder 30 is mounted to the upper part of the backing plate 2. The hydraulic cylinder 30 provides opposed piston rods 32 and 34 that extend outward from the body of the cylinder when pressure is applied to the cylinder as is known in the art. Each of the rods 32 and 34 engages an upper end 36, 38 of a respective actuating lever 10. The upper ends of the levers are urged inward against the rods 32 and 34 by a spring 40.

19. It will be appreciated that when fluid pressure is applied to the cylinder 30 during a braking operation, the rods 32 and 34 apply opposed forces to the upper ends 36 and 38 to rotate the levers about the pivot points formed by the engagement between the lower ends of the levers and the anchor block 14. This, in turn, pushes the brake shoes 8 outward against the brake drum 6 to apply braking action through frictional engagement. Because of leverage, the force applied by the lever to the shoe is twice that applied to the lever by the cylinder. Because of the symmetrical arrangement, both of the shoes have the same forces, thus resulting in a dual leading-shoe operation in both forward and reverse directions.

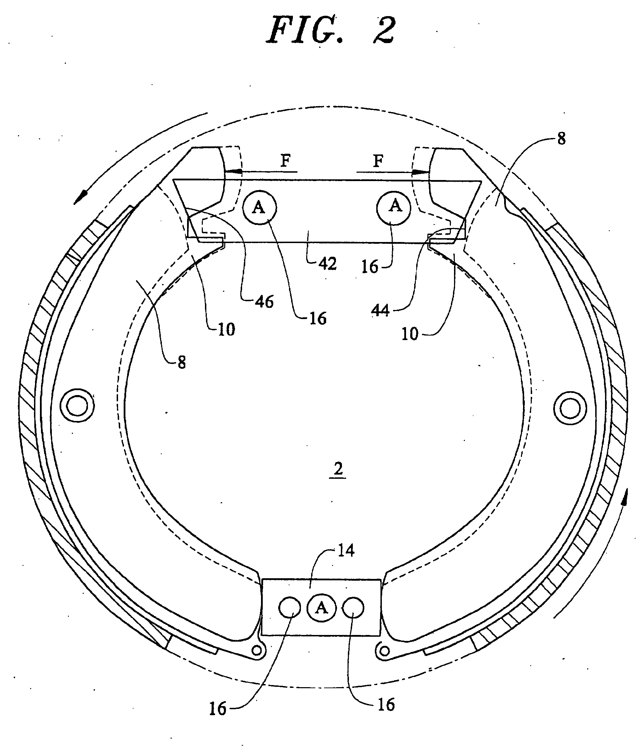

20. A second anchor block 42 (shown more clearly in figure 2) is mounted at the top portion of the backing plate and also secured by rivets. This anchor block includes surfaces 44 and 46, which engage respective upper ends of the brake shoes 8 when the brake drum 6 is rotating in a direction that causes braking force to be applied. When the brake drum is rotating in the counterclockwise direction, as illustrated in figure 2, the friction braking forces will cause the lower end of the left brake shoe to engage the anchor block 14 and the upper end of the right brake shoe to engage anchor block 42. When the brake drum is rotating clockwise, the upper end of the left brake shoe will engage the anchor block 42 and the lower end of the right brake shoe will engage the anchor block 14. Thus, anchor block 14 serves the dual purpose of providing a fulcrum for the actuating levers and resisting the braking forces from the shoes.

21. Because the brake shoes and levers are connected to each other in the embodiment illustrated, the lever has to capable of moving a small distance when the shoe moves to engage the upper anchor on the one hand and the lower anchor on the other. As the brake shoe moves vertically to engage the anchor blocks, the respective levers will also move vertically in such a manner that the lower ends slide along the surfaces 22 and 24. Thus, the lower ends of the levers maintain engagement with the anchor block 14 throughout adjustment of the positions of the brake shoes during braking for forward or reverse directions of the vehicle.

22. The brake construction according to the invention further provides automatic adjustment for the wear of the brake lining and dual leading-shoe operation during application of the parking brake. In accordance with this further feature of the invention, an adjuster link 48 engages respective notches 50 and 52 in the upper ends of the actuating levers 10. The adjuster 48 may be of a design known in the art and preferably includes an automatic adjustment arm 54 pivotally attached to one of the actuating levers at a pivotal connection 53 to adjust automatically for lining wear. The adjustment arm includes a pawl surface 55 that engages an adjustment nut 49 on the adjuster to adjust the length of the adjustment link.

23. In accordance with a further feature of the invention, a parking brake lever 56 is pivotally attached to the upper part of the other lever at 58. The parking brake lever has a notch 60 that also engages the right end of the adjuster 48 during activation of the parking brake. The lower end of the parking brake lever 62 is adapted to receive a cable (not illustrated) or other mechanism for applying a force pulling the bottom of the parking brake lever 56 to the left in figures 1 and 2. A stop 64 limits the extent of movement of the parking brake lever to the right. When the parking brake lever is pulled to the left, it applies a force to the adjuster 48 urging the left lever outward and causing the left brake shoe to engage the brake drum. At the same time, the parking brake lever applies a force to the right lever through the pivot attachment 58, which urges the right brake shoe into engagement with the brake drum. It will thus be appreciated that the simple arrangement of the invention allows the adjuster to be used also for application of forces to the actuating levers in such a manner that dual leading-shoe operation is achieved during parking brake actuation.

24. The preferred design has the added advantage that the two levers are identical, as are the two brake shoes. Thus, the structure of the lever providing pivotal connection 53 is preferably the same as that providing connection 58, and the upper end 36, which engages the rod 32 is identical to upper end 38, which engages rod 34. This simplifies manufacture and stocking of replacement parts.

25. It will be appreciated that a unique, efficient dual leading-shoe drum brake has been described. Modifications within the scope of the appended claims will be apparent to those of skill in the art.

## Claims

1. A dual leading-shoe brake system comprising a backing plate, first and second actuating levers and first and second brake shoes, each brake shoe engaging a respective one of said actuating levers such that said actuating levers urge said brake shoes radially outward during braking operation, a first anchor fixed to said backing plate and engaging lower ends of said actuating levers and adapted to engage a lower end of a said brake shoe during braking, an upper anchor adapted to engage an upper end of said a brake shoe during braking, and an activating element engaging upper ends of said levers and adapted to urge said levers apart during braking.

2. A brake system according to claim 1 further comprising an adjuster of variable length engaged between said actuating levers.

3. A brake system according to claim 2 further comprising a parking brake lever pivotally attached to one of said actuating levers and engaging said adjuster such that pivotal motion of said parking brake lever applies a separating force to said adjuster and to said one of said actuating levers.

4. A brake system according to claim 1 further comprising first and second pins, each of said pins connecting a respective one of said first and second levers to a respective one of said first and second brake shoes.

5. A brake system comprising first and second actuating levers for actuating respective brake shoes, a link extending between respective ends of said levers, and a parking brake lever pivotally attached to one of said actuating levers at a pivotal connection and also engaging one end of said link such that pivotal movement of said parking brake lever applies a force to said one of said actuating levers through said pivot connection and to the other of said actuating levers through said link.

6. A brake system according to claim 5 wherein the length of said link is adjustable.

7. A dual leading-shoe drum brake system comprising:
a backing plate;
an upper anchor secured to an upper part of said backing plate;
a lower anchor secured to a lower part of said backing plate;
first and second substantially identical actuating levers arranged symmetrically with respect to a line between said upper and lower anchors and engaging said lower anchor;
first and second substantially identical brake shoes, each of said brake shoes being located adjacent a respective one of said actuating levers and adapted to be activated by said lever; wherein said brake shoes selectively engage said upper and lower anchors to transfer braking forces during braking; and
an actuating cylinder engaging upper ends of said actuating levers to urge said levers apart and initiate said braking.

8. A system according to claim 7 further comprising an adjustment link extending between said first and second actuating levers.

9. A system according to claim 8 further comprising a parking brake lever pivotally attached to one of said actuating levers and engaging said adjustment link.

10. A system according to claim 7 wherein each of said brake shoes is connected to said respective one of said actuating levers.
